Europäisches Patentamt

European Patent Office

Office européen des brevets

(11) Publication number: **0 398 896 B1**

# EUROPEAN PATENT SPECIFICATION

(45) Date of publication of patent specification: **02.03.94**

(51) Int. Cl.5: **C09J 123/20**, C09J 191/06, C09J 123/14, A61L 15/16

(21) Application number: **89900519.3**

(22) Date of filing: **21.11.88**

(86) International application number:
**PCT/US88/04133**

(87) International publication number:
**WO 89/05334 (15.06.89 89/13)**

(54) **HOT-MELT ADHESIVE COMPOSITION.**

(30) Priority: **30.11.87 US 126439**

(43) Date of publication of application:
**28.11.90 Bulletin 90/48**

(45) Publication of the grant of the patent:
**02.03.94 Bulletin 94/09**

(84) Designated Contracting States:
**AT BE CH DE FR GB IT LI LU NL SE**

(56) References cited:
DE-A- 1 960 467        DE-A- 2 613 587
GB-A- 1 302 283        US-A- 4 072 812
US-A- 4 299 745        US-A- 4 471 086
US-A- 4 886 853

Derwent's abstract no 31 693 K/13, SU 929 677, publ week 8313

(73) Proprietor: **EASTMAN KODAK COMPANY (a New Jersey corporation)**
**343 State Street**
**Rochester New York 14650(US)**

(72) Inventor: **FOSTER, Bruce, William**
**617 Ruthlynn**
**Longview, TX 75601(US)**
Inventor: **CLUBB, Clyde, Neal**
**3021 Marlboro Drive**
**Longview, TX 75605(US)**
Inventor: **STUART, Richard, Kingsley, Jr.**
**718 Oakwood Drive**
**Longview, TX 75604(US)**

(74) Representative: **Parent, Yves et al**
**Kodak-Pathé**
**Département Brevets et Licences**
**CRT 60/1 -Zone Industrielle**
**F-71102 Chalon-sur-Saône Cédex (FR)**

Dialog Information Services, File 351, Wprld Patent Index 81-89, Dialog accession no. 3780842, Mitsui Dupont Polyc: "Hot-melt adhesive compsn. esp. for smooth materials comprisesethylene-alpha olefin copolymer, ethylene-vinyl ester copolymer, tackifier resin and wax" JP 60051768, A, 850323, 8518 (Basic)

## Description

Field of Invention

The present invention concerns hot-melt adhesives (HMAs) containing at least one olefin-based polymer useful as disposable diaper adhesives.

Background of the Invention

Recent trends in the design of disposable diapers have necessitated the development of more versatile adhesives for use in the diapers. The trend of the industry toward diapers with elastic bands on either the legs or the waist of the diaper have made it necessary to use a stronger more delamination resistant adhesive to hold the elastic in place. Most diaper manufacturers prefer to use one hot-melt adhesive to both construct the diaper (that is to bind the nonwoven top sheet and filler to the polyethylene back sheet) and to hold the elastic on the leg or waist of the diaper. It is well known that polyolefin based HMAs are suitable for the construction of diapers by construction techniques as currently practiced such as multiple fine line, hot-melt spray, hot-melt foam, slot coating operations, and various screen coating methods. However, polyolefin-based HMAs are traditionally not suitable for the bonding of the elastic to the diapers, that is, the elastic delamination resistance is insufficient for such an application. For this reason, adhesives based on styrene rubbers such as S-I-S block copolymers or S-B-S block copolymers are used (see, for example, U.S. Patent 4,526,577).

The use of two HMAs on the same diaper poses some problems for the diaper manufacturer. They must insure the right adhesive is used in the right melt tank and is applied to the correct place on the diaper. Therefore, an adhesive that is capable of performing both types of bonding functions is highly desirable.

Wax is traditionally added to hot-melt adhesives with the objective of controlling viscosity of the adhesive. see, for example, USP 4,072,812 , USP 4,471,086 or SU 929-677 That is, it is a diluent and may in some cases lower the cost of the adhesive. For the most part waxes are not known to add to the strength of HMAs but rather are used to control set time or open time or viscosity.

This invention describes a polyolefin-based HMA suitable for use as both the adhesive of construction of disposable diapers and as the adhesive to hold the elastic onto the leg or waistband. Thus a universal diaper adhesive based on polyolefins has been developed. It has been surprisingly found that the addition of a specific low viscosity, substantially crystalline wax having a melt viscosity and a melting point as set forth in claim 1 to a polyolefin-based HMA substantially improves the elastic delamination resistance. The formulation of an HMA containing an olefin-based polymer having sufficient elastic delamination resistance to meet the demands of the universal diaper adhesive is a significant advance in the art.

Summary of the Invention

The present invention is directed to a hot-melt adhesive composition which has a blend of properties that makes it ideally suited for use with disposable diapers.

More specifically, the present invention is directed to a hot-melt adhesive composition having a viscosity of about 3,000 to about 25,000 centipoise at 135°C and a Ring and Ball softening point of about 90°C to about 125°C wherein said adhesive composition contains at least one substantially amorphous olefin-based polymer with an acid number less than about 0.5, said adhesive composition having blended therein, in an amount sufficient to improve the elastic delamination resistance of the composition, at least one substantially crystalline, low viscosity hydrocarbon wax containing substantially no propylene and having a melt viscosity of from about 3 to about 4,000 centipoise at 150°C and a melting point of from about 90°C to about 125°C.

The composition of the present invention is a hot-melt adhesive composition having a viscosity of about 3,000 to about 25,000 centipoise at 135°C, a cone penetration value as measured by ASTM Procedure D-1403 of at least 10 dmm, and a Ring and Ball softening point of about 90°C to about 125°C, said composition comprising a blend of:

(a) at least one substantially amorphous propylene/$C_4$-$C_{10}$ higher 1-olefin random copolymer having an acid number of less than about 0.5,

(b) at least one tackifier, and

(c) at least one substantially crystalline, low viscosity hydrocarbon wax containing substantially no propylene and having a melt viscosity of from about 3 to about 4,000 centipoise at 150°C and a melting point of from about 90°C to about 125°C,

the concentration of components (a), (b), and (c) being such that said adhesive composition has an elastic delamination resistance of at least about 4 hours wherein elastic delamination resistance is the length of time a polyethylene to elastic bond can withstand the stress of elastic relaxation at body temperature. The concentration of compounds (a), (b), and (c) is set forth in claim 1.

Preferably, the composition of the present invention is a hot-melt adhesive composition having a viscosity of about 3,000 to about 25,000 centipoise at 135°C and a Ring and Ball softening point of about 90°C to about 125°C, said composition comprising a blend of:

(i) about 30 to about 70 weight percent of at least one substantially amorphous propylene/$C_4$ to $C_{10}$ higher 1-olefin random copolymer containing from about 20 to about 50 weight percent of higher 1-olefin said polymer having a melt viscosity of from about 2,000 to about 20,000 centipoise at 190°C,

(ii) about 20 to about 50 weight percent of at least one solid tackifier comprising hydrocarbon resins or polyterpene resins, said solid tackifier having a Ring and Ball softening point of from about 70°C to about 145°C,

(iii) 0 to about 30 weight percent of at least one liquid tackifier having a viscosity of from about 5 to about 500 centipoise at 95°C and a Ring and Ball softening point of from about 5°C to about 30°C, and

(iv) from about 1 to about 10 weight percent of at least one substantially crystalline, low viscosity hydrocarbon wax containing substantially no propylene and having a melt viscosity of from about 3 to about 4,000 centipoise at 150°C and a melting point of from about 90°C to about 125°C.

Other preferred hot-melt adhesive compositions are set forth in claims 2 to 12.

The present invention is also directed to a method for applying the compositions of the invention to a disposable diaper and to articles comprising the composition of the invention in combination with a disposable diaper.

## Detailed Description of the Invention

The adhesive compositions of the present invention preferably have a melt viscosity of about 4,000 to about 10,000 centipoise at 135°C. Melt viscosities of the adhesive compositions and the various components thereof can be determined using a Brookfield Model RTV Thermosel viscometer using a Number 27 spindle in accordance with American Society for Testing and Materials (ASTM) Procedure 1824-66.

The adhesive compositions of the present invention preferably have a Ring and Ball softening point (RBSP) of about 100°C to about 120°C. RBSP for the adhesive compositions and various components thereof can be determined by use of ASTM Procedure E-28.

The Gardner color of the adhesive compositions of the present invention preferably is less than about 7, most preferably less than about 3. Gardner color for the adhesive compositions and various components thereof can be determined by use of ASTM Procedure D-1544.

Bond strength of the adhesives of the present invention is at least about 200 grams based on an adhesive coating weight of 2.1 milligrams (mg) per inch (0.83 mg/cm), preferably at least 300 grams. At about 300 grams substrate failure occurs. Bond strength can be measured by the controlled destruction of the bonds by an Instron tensile tester at 10 inches (25.4 cm) per minute (min.). More specifically, nonwoven fabric (e.g., polypropylene or polyester nonwoven fabric commonly used in disposable diaper construction) is bonded by applying a single 2.1 mg per inch (0.83 mg/cm) bead of adhesive on a moving web of polyethylene film at a melt temperature of 140°C, then applying sufficient nip pressure to bring the two substances in contact. The open time is about 1 second, and the compression time is less than 0.5 seconds. The nonwoven fabric is then pulled from the polyethylene in a T-peel mode and the average amount of force required to pull apart the two substances is the bond strength.

Tensile strength of the adhesive compositions of the present invention is typically greater than about 10 pounds per square inch (psi) (68.95 kilopascal), and preferably about 20 to about 50 psi (about 137.90 to about 344.74 kilopascal). Tensile strength can be determined by use of ASTM Procedure D-638-72.

The Cone penetration value of the adhesive compositions of the present invention is typically greater than about 10 decimillimeters (dmm), and preferably greater than about 20 dmm. Cone penetration can be measured by use of ASTM Procedure D-1403.

The elastic delamination resistance of the compositions of the present invention is greater than about 4 hours, preferably greater than about 8 hours, more preferably greater than about 24 hours, and most preferably greater than about 100 hours. The elastic delamination resistance is determined by the following procedure:

Elastic, 0.25 inches (0.635 cm) wide and 0.007 (0.01778 cm) inches thick, typically used in disposable diaper construction (can be obtained from Fulflex Company) is expanded to 100% elongation. Test adhesive is applied as a bead at 275°F (135ºC) to the elongated elastic which is then immediately brought into contact with polyethylene film and passed through a compression roller. The hot-melt adhesive bead weight is controlled at 10 to 15 mg per linear inch of polyethylene film. The polyethylene film is 1-2 mils (0,0254 - 0,0508 mm) thick and is a low density polyethylene blended with linear low density polyethylene or high density polyethylene. The polyethylene film is pigmented with $TiO_2$ and corona treated and is typical of polyethylene film used in disposable diaper manufacture. The bonded material is allowed to relax and age overnight. After aging, specimens 8-inches long are cut. The center 6 inch (15.25 cm) sections of the specimens are elongated to 12 inches (30.48 cm) (100% elongation) and then the polyethylene is clamped in a metal jig with the elastic surface up. The elastic is not clamped. The specimens are then placed in an oven at 100°F (37.78ºC) for various times. The time at which a visible, continuous delamination or end release is observed is the elastic delamination resistance.

The adhesive compositions of the present invention contain at least one substantially amorphous propylene/$C_4$-$C_{10}$ higher 1-olefin random copolymer with an acid number less than about 0.5. The copolymer is present as an amount of 30 to about 70 weight percent of the adhesive composition, more preferably about 40 to about 65 weight percent. The copolymer can be a polymer made from more than two monomers. Such polymers are known to be useful in adhesive formulations and many are commercially available. The copolymers can be prepared using techniques known in the art, for example, by use of the techniques disclosed in U.S. Patents 3,954,697 and 4,259,470, both of which are incorporated herein by reference.

Preferred copolymers have a melt viscosity of from about 2,000 to about 20,000 centipoise (cp) at 190°C, preferably about 4,000 to about 20,000 cp. Perferred propylene/$C_4$ to $C_{10}$ higher 1-olefin random copolymers have a higher 1-olefin content of about 20 to about 50 weight percent, preferably about 30 to about 40 weight percent. The preferred higher 1-olefins in the copolymers are 1-hexene and 1-butene with 1-hexene being most preferred. It is perferred that the RBSP for such copolymers is about 100°C to about 134°C, more preferably about 124°C to about 134°C for a propylene/hexene copolymer and about 100°C to about 120°C for a propylene/butene copolymer.

The low viscosity, substantially crystalline hydrocarbon wax in the adhesive composition of the present invention is present in an amount sufficient to improve the elastic delamination resistance of the composition. Typically this amount is about 1 to about 10 weight percent of the composition, preferably about 3 to about 7 weight percent. The hydrocarbon waxes in the adhesive compositions of the present invention are widely available articles of commerce and can be prepared by known techniques. These waxes are preferably polyethylene waxes. Such polyethylene waxes can be made by direct synthesis or by degrading polyethylene, preferably high density polyethylene (i.e., ≧ about 0.94 grams(g)/cubic centimeters (cc)) to the desired viscosity. The waxes have a melt viscosity of from about 3 to about 4,000 centipoise, preferably about 3 to about 1,000 centipoise and a melting point of from about 90°C to about 125°C, preferably about 105°C to about 125°C. The waxes also preferably have a penetration hardness at 23°C of about 0.1 dmm to about 10 dmm. Penetration hardness can be measured by ASTM procedure D-1321-76. Specific waxes useful in the present invention include Epolene C-15 and Epolene N-45, available from Eastman Chemical Products, Inc., Bareco 1000 and Bareco BE$^2$ 195, available from Petrolite Corp., and Paraflint H1, available from Moore and Munger, Inc. Preferred is Bareco 1000 and Epolene N-45.

The adhesive compositions of the present invention typically contain one or more tackifiers in an amount of about 20 to about 60 weight percent of the composition. Solid tackifiers are typically present in an amount of from 20 to 50 weight percent, preferably 25 to 40 weight percent. The solid tackifiers can be hydrocarbon resins such as DAC-B hydrocarbon resin prepared according to the process disclosed in U.S. Patent 3,701,760 as well as other hydrocarbon resins, polyterpenes, and the like. One such hydrocarbon tackifying resin is a hydrocarbon resin having a softening point of about 100°C and available commercially as Eastotac H-100 from Eastman Chemical Products, Inc. Other hydrocarbon tackifying resins can be prepared by the polymerization of monomers consisting primarily of olefins and diolefins and include, for example, the residual by-product monomers resulting from the manufacture of isoprene. These hydrocarbon tackifying resins typically exhibit a RBSP of from about 70°C to about 145°C; an acid number of from about 0-2, a saponification value of less than about 1; and an iodine value of from about 30 to 100. Examples of such commerically available resins based on a $C_5$-olefin fraction of this type are "Wingtack" 95 and "Wingtack" 115 tackifying resins sold by Goodyear Tire and Rubber Company, the Sta-Tac and Betaprene A or H resins sold by Reichhold Chemical Corporation, and Escorez resins sold by Exxon Chemical Co.

Also, other suitable solid tackifier resins are the terpene polymers such as the polymeric, resinous materials obtained by polymerization and/or copolymerization of terpene hydrocarbons such as the alicyclic, monocyclic, and bicyclic monoterpenes and their mixtures, including alloocimene, carene, isomerized pinene, pinene, dipentene, terpinene, terpinolene, limonene, terpentine, a terpene cut or fraction, and various other terpenes. Particularly useful starting materials are terpene mixtures containing at least 20 percent beta-pinene and/or limonene or dipentene (racemic limonene), and the "sulfate terpentine" obtained as a by-product in the sulfate pulping process. Commercially available resins of the terpene type include the Zonarez terpene B-Series and 7000 Series resins from Arizona Chemical Corp. and Nires resins from Reichhold Chemical Corp. The typical properties reported for the Zonarez terpene resins include RBSPs of about 55° to 125°C (ASTM E-28-67), color of 2 to 3 (Gardner 1963, 50% in heptane), acid number of less than 1 (ASTM D465-59), saponification number of less than 1 (ASTM D464-59) and specific gravity at 25°C of 0.96 to 0.99 (ASTM D1963-61).

The liquid tackifiers are typically present in an amount of from 0 to about 30 weight percent of the adhesive composition, preferably 15 to 25 weight percent. The liquid tackifiers are commercial items and/or can be prepared by techniques known in the art, for example, by the techniques described in U.S. Patent 3,872,064, incorporated herein by reference. The liquid tackifiers are preferably liquid hydrocarbon resins such as synthetic polyterpene or other petroleum hydrocarbon resins. Specific examples include "Wingtack" 10 from Goodyear Tire and Rubber Company and "Escorez" 2520 (also known as ECR-140) from Exxon Chemical Co. The liquid tackifiers have a melt viscosity of about 10,000 to about 50,000 cp at 23°C, preferably about 20,000 to about 40,000; a RBSP of about 5 to about 30, preferably about 10 to about 20, and a glass transition temperature (Tg) of about -10°C to about -30°C.

The adhesive compositions of this invention are prepared by blending together the adhesive components in the melt at a temperature of about 160°C to about 200°C until a homogeneous mixture is obtained. Various methods of blending materials of this type are known to the art and any method that produces a homogeneous mixture is satisfactory. These components blend easily in the melt and a heated vessel equipped with a stirrer is all that is required. For example, a Cowles stirrer provides effective mixing for preparing these compositions. Solvents such as hexane, heptane, mineral spirits, xylene, toluene, benzene, chlorinated hydrocarbons, etc., are not needed to prepare the compositions of this invention; however, they can be used if desired.

In addition to the hereinabove described adhesive components, it is desirable for the adhesive compositions to contain about 0.1 percent to about 1.5 percent by weight, preferably about 0.25 percent to 1.0 percent by weight, of one or more antioxidants. Antioxidants that are effective include, for example, tris-(di-t-butyl-p-hydroxybenzyl)-trimethylbenzene (Ionox 330), alkylated bisphenol (Naugawhite), zinc dibutyl dithiocarbamate (Butyl Zimate), and 4,4'-methylene bis(2,6-di-tert-butylphenol)(Ethyl702), tetrakis-[methylene(3,5-di-tert-butyl-4-hydroxyhydrocinnamate(methane] (Irganox 1010), lauryl stearyl thiodipropionate (Cyanox 1212), and dilauryl 3,3'-thiodipropionate (Cyanox LTDP) and 2,6-di-tert-butyl-p-cresol (BHT) and the like.

Additional additives such as nucleating agents, pigments, colorants, fillers, solvents, and the like can also be added to the adhesive compositions of the present invention.

The adhesive compositions of the present invention can be made into any physical form typically used in the art. When formed into slats, the compositions typically are coated with a wax which may or may not be a wax within the scope of the invention.

In the method of the present invention, the adhesive composition is applied to a disposable diaper or portion thereof using techniques known in the art. For example, the adhesive composition can be applied by multiple fine line, hot-melt spray, hot-melt foam, slot coating operations, and various screen coating methods. The amount of adhesive composition applied to a diaper is that amount sufficient to result in bonds that will withstand typical storage and end use conditions. It is contemplated that the adhesive compositions of the present invention are useful in applications other than diapers, for example, in sanitary napkins and bed pad construction.

In the adhesive compositions of the present invention, as appreciated by one skilled in the art, the particular proportions of components necessary to achieve specific desired properties will vary depending on the nature of the particular components.

This invention can be further illustrated by the following examples thereof, although it will be understood that these examples are included merely for purposes of illustration and are not intended to limit the scope of the invention.

Examples 1-2

An adhesive composition was made in accordance with the present invention containing 5 weight % of a hydrocarbon wax as described herein (Example 2). For comparison, an adhesive composition outside the scope of the invention, i.e., not containing a hydrocarbon wax, was also prepared (Example 1). The two compositions were tested for their respective elastic delamination resistance (EDL). As shown in Table 1, the EDL of Example 1 was only four hours, whereas the EDL of Example 2 was greater than 100 hours.

## TABLE 1 - ADHESIVE BLENDS

| EXAMPLE NUMBER | 1 | 2 |
|---|---|---|
| **COMPOSITION (Weight %)** | | |
| [1]APH 5 | 26 | 26 |
| [2]APH 3 | 17 | 22 |
| [3]Eastotac H-130W | 36.5 | 26.5 |
| [4]Escorez 2520 | 20 | 20 |
| [5]Bareco 1000 | – | 5.0 |
| [6]Irganox 1010 | 0.5 | 0.5 |
| **BLEND PROPERTIES** | | |
| VISCOSITY @ 135°C, cp | 9600 | 6600 |
| RBSP, °C | 113 | 108 |
| CONE PENETRATION, dmm | 18 | 14 |
| TENSILE STRENGTH, psi (KPa) | 15 (103.42) | 30 (206.84) |
| **ELASTIC DELAMINATION RESISTANCE** | | |
| Time to failure, hrs | 4 | >100 |
| BOND STRENGTH, grams | 200 | 300 (substrate failed) |

[1]APH 5 = amorphous propylene/1-hexene copolymer having a viscosity of 17,000 cp at 190°C, 23 weight % 1-hexene content, and a RBSP of 138°C.

[2]APH 3 = amorphous propylene/1-hexene copolymer having a viscosity of 3,000 cp at 190°C, 55 weight % 1-hexene content, and a RBSP of 114°C.

[3]Eastotac H-130W = solid tackifier, petroleum hydrocarbon resin, RBSP of 130°C melt viscosity at 190°C of 1,000 cp.

[4]Escorez 2520 = liquid tackifier, RBSP of 20°C, Tg of -20°C, melt viscosity of 40,000 cp at 23°C.

[5]Bareco 1000 = high density, low viscosity, crystalline polyethylene wax, melting point of 113°C, penetration hardness of 1 dmm, density of 0.96 g/cc, melt viscosity of 11 cp at 150°C.

[6]Irganox 1010 = antioxidant

Examples 3-8

Adhesive blends having a relatively high proportion of propylene/1-hexene copolymer (i.e. 47%) were prepared in accordance with the present invention. The RBSPs of the blends were varied primarily by adjusting the % hexene content of the copolymer. Variations in the elastic delamination resistance (EDL) were observed, however, in all cases the EDLs were greater than four hours as shown in Table 2.

**TABLE 2 - ADHESIVE BLENDS**

| EXAMPLE NUMBER | 3 | 4 | 5 | 6 | 7 | 8 |
|---|---|---|---|---|---|---|
| **BLEND COMPOSITION (Wt %)** | | | | | | |
| [1]APH | 47.0 | 47.0 | 47.0 | 47.0 | 47.0 | 47.0 |
| [2]Escorez 2520 | 19.5 | 19.5 | 19.5 | 19.5 | 19.5 | 19.5 |
| [3]Eastotac H-130W | 26.0 | 26.0 | 26.0 | 26.0 | 26.0 | 26.0 |
| [4]Bareco 1000 | 3.0 | 3.0 | 3.0 | 3.0 | 3.0 | 3.0 |
| [5]Epolene C-15 | 4.0 | 4.0 | 4.0 | 4.0 | 4.0 | 4.0 |
| [6]Irganox 1010 | 0.5 | 0.5 | 0.5 | 0.5 | 0.5 | 0.5 |
| **PHYSICAL PROPERTIES OF APH** | | | | | | |
| Viscosity @ | | | | | | |
| 375°F(190.56°C), cp | 5475 | 8325 | 7650 | 9550 | 7000 | 5300 |
| RBSP, deg C | 132 | 138 | 135 | 132 | 124 | 126 |
| % Hexene | 36 | 33 | 35 | 36 | 40 | 40 |
| **PHYSICAL PROPERTIES OF BLEND** | | | | | | |
| Viscosity @ 135°C, cp | 8500 | 22750 | 29000 | 19000 | 7750 | 6440 |
| RBSP, °C | 111 | 120.5 | 116.5 | 112 | 107 | 107 |
| Cone Penetration, dmm | 25 | 23.5 | 24 | 22 | 23 | 26 |
| **ELASTIC DELAMINATION RESISTANCE** | | | | | | |
| Time to failure, hrs | >47 | >47 | >4 | >4 | >4 | >8 |

[1]APH = amorphous propylene/1-hexene copolymer

[2]Escorez 2520 = liquid tackifier, RBSP of 20°C, Tg of -20°C, melt viscosity at 23°C of 40,000 cp.

[3]Eastotac H-130W = solid tackifier, petroleum hydrocarbon resin, RBSP of 130°C, melt viscosity at 190°C of 1,000 cp.

[4]Bareco 1000 = high density, low viscosity, crystalline polyethylene wax, melting point of 113°C, penetration hardness of 1 dmm, density of 0.96 g/cc, melt viscosity of 11 cp at 150°C.

[5]Epolene C-15 = lower density, low viscosity, crystalline polyethylene wax, melting point of 102°C, penetration hardness of 4 dmm, density of 0.91 g/cc, melt viscosity of 3,900 cp at 150°C.

[6]Irganox 1010 = antioxidant

Examples 9-16

Adhesive blends were prepared in accordance with the present invention. The compositions and properties of these blends are shown in Table 3. Example 14 is a comparative example without a wax.

TABLE 3 - ADHESIVE BLENDS

| EXAMPLE NUMBER | 9 | 10 | 11 | 12 | 13 | 14* | 15 | 16 |
|---|---|---|---|---|---|---|---|---|
| COMPOSITION (Wt. %) | | | | | | | | |
| 1 APH | 48 | - | 48 | 48 | 48 | 50.5 | 50 | 45.7 |
| 2 APB | - | 54.5 | - | - | - | - | - | - |
| 3 Eastotac H-130W | 26.5 | 20 | 26.5 | 26.5 | 26.5 | 27.9 | 17.6 | 25.2 |
| 4 Escorez 2520 | 20 | 20 | 20 | 20 | 20 | 21.1 | 20.8 | 19 |
| 5 Bareco 1000 | 5 | 5 | - | - | - | - | - | - |
| 6 Epolene N-45 | - | - | 5 | 5 | - | - | 1 | 10 |
| 7 Epolene C-15 | - | - | - | - | - | - | - | - |
| 8 Bareco Be2 195 | - | - | - | - | - | - | - | - |
| 9 Paraflint H-1 | - | - | - | - | 5 | - | - | - |
| 10 Irganox 1010 | 0.5 | 0.5 | 0.5 | 0.5 | 0.5 | 0.5 | 0.5 | 0.5 |

1 APH = amorphous propylene/1-hexene copolymer
2 APB = amorphous propylene/1-butene copolymer
3 Eastotac H-130W = solid tackifier
4 Escorez 2520 = liquid tackifier
5 Bareco 1000 = wax, crystalline polyethylene wax, Mp = 113°C, viscosity (150°C) 11cp.
6 Epolene N-45 = wax, polyethylene wax, Mp = 123°C, viscosity (150°C) 500cp.
7 Epolene C-15 = wax, crystalline polyethylene wax, Mp = 102°C, viscosity (150°C) 3,900cp.
8 Bareco Be2195 = wax, micro crystalline polyethylene wax, Mp = 91°C, viscosity (150°C) 3cp.
9 Paraflint H-1 = wax, Fisher Tropech polyethylene wax, Mp = 13°C, viscosity (150°C) 3cp.
10 Irganox 1010 = antioxidant

9

TABLE 3- ADHESIVE BLENDS (Continued)

| EXAMPLE NUMBER | 9 | 10 | 11 | 12 | 13 | 14 | 15 | 16 |
|---|---|---|---|---|---|---|---|---|
| **PHYSICAL PROPERTIES OF APH AND APB** | | | | | | | | |
| Viscosity @ 375°F(190.56°C), cp | 5475 | 10000 | 5475 | 5475 | 5475 | 5475 | 5475 | 5475 |
| RBSP, °C | 132 | 110 | 132 | 132 | 132 | 132 | 132 | 132 |
| % Hexene | 36 | 0 | 36 | 36 | 36 | 36 | 36 | 36 |
| % Butene | 0 | 40 | 0 | 0 | 0 | 0 | 0 | 0 |
| **PHYSICAL PROPERTIES OF WAX** | | | | | | | | |
| Melting point, °C | 113 | 123 | 102 | 91 | 113 | – | 123 | 123 |
| Density, g/cc | 0.96 | 0.95 | 0.91 | 0.93 | 0.94 | – | 0.95 | 0.95 |
| Viscosity @ 150°C, cp | 11 | 500 | 3900 | 3 | 3 | – | 500 | 500 |
| Wax type | ethylene | ethylene | ethylene | micro-crystalline | Fischer-Tropech | – | ethylene | ethylene |
| Penetration Hardness, dmm | 0.5 | 0.1 | 4 | 7 | 2 | – | 0.1 | 0.1 |
| **BLEND PROPERTIES** | | | | | | | | |
| VISCOSITY @ 135°C, cp | 8000 | 10500 | 8000 | 4880 | 4880 | 6880 | 7100 | 4200 |
| RBSP, °C | 117 | 117 | 117 | 111 | 103 | 113 | 115 | 117 |
| CONE PENETRATION, dmm | 17 | 18 | 39 | 10 | 18 | 42 | 33 | 14 |
| **ELASTIC DELAMINATION RESISTANCE** | | | | | | | | |
| Time to failure, hrs | 24 | 24 | 24 | 24 | 24 | <1 | 24 | >72 |

* comparative example

**Claims**

1. A hot-melt adhesive composition having a melt viscosity of 3,000 to 25,000 centipoise at 135°C, a cone penetration value as measured by ASTM Procedure D-1403 of at least 10 dmm, and a Ring and

10

Ball softening point of 90°C to 125°C, said composition comprising a blend of : (a) 30-70 weight percent of at least one substantially amorphous propylene/$C_4$-$C_{10}$ higher 1-olefin random copolymer having an acid number of less than 0.5, (b) 20-60 weight percent of at least one tackifier, and (c) 1-10 weight percent of at least one substantially crystalline, low viscosity hydrocarbon wax containing substantially no propylene and having a melt viscosity of from 3 to 4,000 centipoise at 150°C and a melting point of from 90°C to 125°C.

2. The adhesive composition of Claim 1 wherein said adhesive composition has a viscosity of about 4,000 to 10,000 centipoise at 135°C and a Ring and Ball softening point of 100°C to 120°C.

3. The composition of Claim 1 wherein said hydrocarbon wax is a polyethylene wax having a melt viscosity of from 3 to 1,000 centipoise at 150°C, a melting point of from 105°C to 125°C, and a penetration hardness of 0.1 to 10.

4. The adhesive composition of Claim 1 wherein said higher 1-olefin is 1-hexene or 1-butene.

5. The composition of Claim 1 additionally containing at least one antioxidant, at least one additional additive or a mixture thereof.

6. The adhesive composition of Claim 1 comprising
   (i) 30 to 70 weight percent of at least one substantially amorphous propylene/hexene random copolymer containing from 20 to 50 weight percent of 1-hexene, said copolymer having a melt viscosity of from 2,000 to 20,000 centipoise at 190°C,
   (ii) 20 to 50 weight percent of at least one solid tackifier comprising hydrocarbon resins or polyterpene resins, said tackifier having a Ring and Ball softening point of from 70°C to 145°C,
   (iii) 0 to 30 weight percent of at least one liquid tackifier having a viscosity of from 10,000 to 50,000 centipoise at 23°C and a Ring and Ball softening point of from 5°C to 30°C, and
   (iv) from 1 to 10 weight percent of at least one high density, substantially crystalline, low viscosity hydrocarbon wax containing substantially no propylene and having a melt viscosity of from 3 to 4,000 centipoise at 150°C and a melting point of about 90°C to 125°C.

7. The composition of Claim 6 wherein
   Component (i) comprises : 40 to 65 weight percent of at least one substantially amorphous propylene/hexene random copolymer containing from 30 to 40 weight percent of 1-hexene, said copolymer having a melt viscosity of from 4,000 to 20,000 centipoise at 190°C and having a Ring and Ball softening point of 100°C to 134°C,
   Component (ii) comprises : 25 to 40 weight percent of at least one solid tackifier comprising hydrocarbon resins or polyterpene resins,
   Component (iii) comprises : from 15 to 25 weight percent of at least one liquid tackifier having a viscosity of from 20,000 to 40,000 centipoise at 23°C, a Ring and Ball softening point of from 10°C to 20°C, and a Tg of -10°C to -30°C, and
   Component (iv) comprises : from 3 to 7 weight percent of at least one substantially crystalline, low viscosity polyethylene wax having a melt viscosity of from 3 to 1,000 centipoise at 150°C and a melting point of from 105°C to 125°C.

8. The adhesive composition of Claim 6 wherein said solid tackifier is a $C_5$ hydrocarbon resin or polyterpene resin.

9. The adhesive composition of Claim 6 wherein said liquid tackifier is a synthetic polyterpene.

10. The adhesive composition of Claim 6 having a Gardner color of less than 3.

11. The adhesive composition of Claim 1 having a melt viscosity of 4,000 to 10,000 centipoise at 135°C, a cone penetration value as measured by ASTM Procedure D-1403 of at least 10 dmm, a Ring and Ball softening point of 100°C to 120°C, and a Gardner color of less than 7, said composition comprising a blend of :
    (a) 40 to 65 weight percent of at least one substantially amorphous propylene/hexene random copolymer containing from 30 to 40 weight percent of 1-hexene, said copolymer having a melt viscosity of from 4,000 to 20,000 centipoise at 190°C and a Ring and Ball softening point of 124°C to 134°C,

(b) 25 to 40 weight percent of at least one solid tackifier comprising a hydrocarbon resin, said solid tackifier having a Ring and Ball softening point of 70°C to 145°C and an iodine value of from about 30 to 100,

(c) 15 to 25 weight percent of at least one liquid tackifier comprising a hydrocarbon resin, said liquid tackifier having a Ring and Ball softening point of 10°C to 20°C, a melt viscosity of 20,000 to 40,000 centipoise at 23°C and a Tg as measured by DSC of -10°C to -30°C,

(d) 3 to 7 weight percent of at least one high density, substantially crystalline, low viscosity polyethylene wax containing substantially no propylene and having a melt viscosity of from 3 to 1,000 centipoise at 150°C and a melting point of 105 to 125°C, and

(e) 0.25 to 1.0 weight percent of at least one antioxidant.

**12.** The adhesive composition of Claim 11 having a melt viscosity of 8,000 centipoise at 135°C, a Ring and Ball softening point of 117°C, and a Gardner color of less than 3, and wherein :

component (a) comprises :

48 weight percent of said amorphous propylene/hexene copolymer having a Ring and Ball softening point of 132°C and a melt viscosity of 5,500 centipoise at 190°C,

component (b) comprises :

27 weight percent of said solid tackifier having a Ring and Ball softening point of 130°C and a melt viscosity at 190°C of 1,000 centipoise,

component (c) comprises :

20 weight percent of said liquid tackifier having a Ring and Ball softening point of 20°C, a Tg of -20°C, and a melt viscosity of 40,000 centipoise at 23°C,

component (d) comprises :

5 weight percent of said polyethylene wax having a melting point of 123°C, a density of 0.95 g/cc, and a melt viscosity at 150°C of 500 centipoise, and

component (e) comprises :

0.5 weight percent of said antioxidant.

**13.** A method for manufacturing a diaper comprising applying the adhesive composition of Claim 1 to a disposable diaper or portion thereof.

**14.** An article comprising a disposable diaper having applied thereon the adhesive composition of Claim 1.

## Patentansprüche

**1.** Heiß-Schmelzklebmasse mit einer Schmelz-Viskosität von 3000 bis 25000 Centipoise bei 135°C, einem Kegeleindringwert, gemessen nach der ASTM-Methode D-1403 von mindestens 10 dmm sowie einem Erweichungspunkt, gemessen nach der Ring- und Kugelmethode von 90°C bis 125°C, aus einer Mischung aus:

(a) 30 bis 70 Gew.-% von mindestens einem im wesentlichen amorphen Copolymer aus Propylen/höheren $C_4$-$C_{10}$ 1-Olefinen in willkürlicher Verteilung mit einer Säurezahl von weniger als 0,5,

(b) 20 bis 60 Gew.-% mindestens einer klebrigmachenden Komponente, und

(c) 1 bis 10 Gew.-% von mindestens einem im wesentlichen kristallinen Kohlenwasserstoff-Wachs von niedriger Viskosität, das im wesentlichen kein Propylen enthält und eine Schmelz-Viskosität von 3 bis 4000 Centipoise bei 150°C sowie einen Schmelzpunkt von 90°C bis 125°C aufweist.

**2.** Heiß-Schmelzklebmasse nach Anspruch 1, in der die Klebmasse eine Viskosität von etwa 4000 bis 10000 Centipoise bei 135°C aufweist sowie einen Erweichungspunkt, gemessen nach der Ring- und Kugelmethode von 100°C bis 120°C.

**3.** Heiß-Schmelzklebmasse nach Anspruch 1, in der das Kohlenwasserstoff-Wachs ein Polyethylen-Wachs mit einer Schmelz-Viskosität von 3 bis 1000 Centipoise bei 150°C, einem Schmelzpunkt von 105°C bis 125°C und einer Penetrationshärte von 0,1 bis 10 ist.

**4.** Heiß-Schmelzklebmasse nach Anspruch 1, in der das höhere 1-Olefin 1-Hexen oder 1-Buten ist.

**5.** Heiß-Schmelzklebmasse nach Anspruch 1, die zusätzlich mindestens ein Antioxidationsmittel und mindestens ein zusätzliches Additiv oder eine Mischung hiervon enthält.

**6.** Heiß-Schmelzklebmasse nach Anspruch 1 mit:

(i) 30 bis 70 Gew.-% von mindestens einem im wesentlichen amorphen Propylen/Hexen-Copolymer mit willkürlicher Verteilung, mit 20 bis 50 Gew.-% 1-Hexen, mit einer Schmelz-Viskosität von 2000 bis 20000 Centipoise bei 190°C,

(ii) 20 bis 50 Gew.-% von mindestens einer festen klebrigmachenden Komponente aus Kohlenwasserstoffharzen oder Polyterpenharzen, wobei die klebrigmachende Komponente einen Erweichungspunkt, gemessen nach der Ring- und Kugelmethode von 70°C bis 145°C aufweist,

(iii) 0 bis 30 Gew.-% von mindestens einer flüssigen klebrigmachenden Komponente mit einer Viskosität von 10000 bis 50000 Centipoise bei 23°C und einem Erweichungspunkt, gemessen nach der Ring- und Kugelmethode von 5°C bis 30°C und

(iv) 1 bis 10 Gew.-% von mindestens einem hochdichten, praktisch kristallinen Kohlenwasserstoff-Wachs niedriger Viskosität mit praktisch keinem Propylen und mit einer Schmelz-Viskosität von 3 bis 4000 Centipoise bei 150°C und einem Schmelzpunkt von etwa 90°C bis 125°C.

**7.** Heiß-Schmelzklebmasse nach Anspruch 6, in der

die Komponente (i) aufweist: 40 bis 65 Gew.-% von mindestens einem praktisch amorphen Propylen/Hexen-Copolymer mit willkürlicher Verteilung mit 30 bis 40 Gew.-% 1-Hexen, wobei das Copolymer eine Schmelz-Viskosität von 4000 bis 20000 Centipoise bei 190°C aufweist und einen Erweichungspunkt, gemessen nach der Ring- und Kugelmethode von 100°C bis 134°C,

die Komponente (ii) aufweist: 25 bis 40 Gew.-% mindestens einer festen klebrigmachenden Komponente aus Kohlenwasserstoffharzen oder Polyterpenharzen,

die Komponente (iii) aufweist: 15 bis 25 Gew.-% von mindestens einer flüssigen klebrigmachenden Komponente mit einer Viskosität von 20000 bis 40000 Centipoise bei 23°C, einem Erweichungspunkt, gemessen nach der Ring- und Kugelmethode von 10°C bis 20°C und einen Tg-Wert von -10°C bis -30°C, und

die Komponente (iv) umfaßt: 3 bis 7 Gew.-% von mindestens einem, praktisch kristallinen, Polyethylen-Wachs niedriger Viskosität mit einer Schmelz-Viskosität von 3 bis 1000 Centipoise bei 150°C sowie einem Schmelzpunkt von 105°C bis 125°C.

**8.** Heiß-Schmelzklebmasse nach Anspruch 6, in der die feste klebrigmachende Komponente ein $C_5$-Kohlenwasserstoffharz oder Polyterpenharz ist.

**9.** Heiß-Schmelzklebmasse nach Anspruch 6, in der die flüssige klebrigmachende Komponente ein synthetisches Polyterpen ist.

**10.** Heiß-Schmelzklebmasse nach Anspruch 6 mit einer Gardner-Farbe von weniger als 3.

**11.** Heiß-Schmelzklebmasse nach Anspruch 1 mit einer Schmelz-Viskosität von 4000 bis 10000 Centipoise bei 135°C, einem Kegeleindringwert, gemessen nach der ASTM-Methode D-1403 von mindestens 10 dmm, einem Erweichungspunkt, gemessen nach der Ring- und Kugelmethode von 100°C bis 120°C und mit einer Gardner-Farbe von weniger als 7, bestehend aus einer Mischung aus:

(a) 40 bis 65 Gew.-% von mindestens einem praktisch amorphen Propylen/Hexen-Copolymer mit willkürlicher Verteilung mit 30 bis 40 Gew.-% 1-Hexen, wobei das Copolymer eine Schmelz-Viskosität von 4000 bis 20000 Centipoise bei 190°C aufweist und einen Erweichungspunkt, gemessen nach der Ring- und Kugelmethode von 124°C bis 134°C,

(b) 25 bis 40 Gew.-% von mindestens einer festen klebrigmachenden Komponente aus einem Kohlenwasserstoffharz, wobei die feste klebrigmachende Komponente einen Erweichungspunkt, gemessen nach der Ring- und Kugelmethode von 70°C bis 145°C aufweist und einen Iod-Wert von etwa 30 bis 100,

(c) 15 bis 25 Gew.-% von mindestens einer flüssigen klebrigmachenden Komponente aus einem Kohlenwasserstoffharz, wobei die flüssige klebrigmachende Komponente einen Erweichungspunkt, gemessen nach der Ring- und Kugelmethode von 10°C bis 20°C aufweist, eine Schmelz-Viskosität von 20000 bis 40000 Centipoise bei 23°C und einen Tg-Wert, gemessen nach der DSC-Methode von -10°C bis -30°C,

13

EP 0 398 896 B1

(d) 3 bis 7 Gew.-% von mindestens einem hochdichten, praktisch kristallinen, Polyethylen-Wachs niedriger Viskosität, das praktisch kein Propylen enthält und eine Schmelz-Viskosität von 3 bis 1000 Centipoise bei 150°C hat sowie einen Schmelzpunkt von 105 bis 125°C, und
(e) 0,25 bis 1,0 Gew.-% von mindestens einem Antioxidationsmittel.

12. Heiß-Schmelzklebmasse nach Anspruch 11 mit einer Schmelz-Viskosität von 8000 Centipoise bei 135°C, einem Erweichungspunkt, gemessen nach der Ring- und Kugelmethode von 117°C und einer Gardner-Farbe von weniger als 3, worin:
die Komponente (a) aufweist:
48 Gew.-% des amorphen Propylen/Hexen-Copolymeren mit einem Erweichungspunkt, gemessen nach der Ring- und Kugelmethode von 132°C und einer Schmelz-Viskosität von 5500 Centipoise bei 190°C,
die Komponente (b) aufweist:
27 Gew.-% der festen klebrigmachenden Komponente mit einem Erweichungspunkt, gemessen nach der Ring- und Kugelmethode von 130°C und mit einer Schmelz-Viskosität von 1000 Centipoise, gemessen bei 190°C,
die Komponente (c) aufweist:
20 Gew.-% der flüssigen klebrigmachenden Komponente mit einem Erweichungspunkt, gemessen nach der Ring- und Kugelmethode von 20°C, einem Tg-Wert von -20°C und einer Schmelz-Viskosität von 40000 Centipoise bei 23°C,
die Komponente (d) aufweist:
5 Gew.-% des Polyethylen-Wachses mit einem Schmelzpunkt von 123°C, einer Dichte von 0,95 g/cm$^3$ und einer Schmelz-Viskosität von 500 Centipoise, gemessen bei 150°C, und
die Komponente (e) aufweist:
0,5 Gew.-% des Antioxidationsmittels.

13. Verfahren zur Herstellung eines Diaper-Produktes oder einer Windel, bei dem man die Heiß-Schmelzklebmasse von Anspruch 1 auf ein Wegwerf-Diaper-Material oder einen Teil hiervon aufbringt.

14. Gegenstand aus oder umfassend ein Wegwerf-Diaper-Material (Windel) mit einer hierauf aufgebrachten Heiz-Schmelzklebmasse nach Anspruch 1.

**Revendications**

1. Une composition adhésive thermofusible ayant une viscosité à l'état fondu de 3 000 à 25 000 cPs à 135°C, une valeur de pénétration du cône mesurée selon la nonne ASTM D-1403 d'au moins 10 dmm et un point de ramollissement par la méthode bille et anneau de 90 à 125°C, ladite composition comprenant un mélange de :
(a) 30-70 % en poids d'au moins un copolymère statistique propylène/1-oléfine supérieure en $C_4$-$C_{10}$ pratiquement amorphe ayant un indice d'acide de moins de 0,5,
(b) 20-60 % en poids d'au moins un agent d'adhésivité et
(c) 1-10 % en poids d'au moins une cire hydrocarbonée de faible viscosité, pratiquement cristalline ne contenant pratiquement pas de propylène et ayant une viscosité à l'état fondu de 3 à 4 000 cPs à 150°C et un point de fusion de 90 à 125°C.

2. La composition adhésive selon la revendication 1, dans laquelle ladite composition adhésive a une viscosité d'environ 4 000 à 10 000 cPs à 135°C et un point de ramollissement par la méthode bille et anneau de 100 à 120°C.

3. La composition selon la revendication 1, dans laquelle ladite cire hydrocarbonée est une cire de polyéthylène ayant une viscosité à l'état fondu de 3 à 1 000 cPs à 150°C, un point de fusion de 105 à 125°C et une dureté de pénétration de 0,1 à 10.

4. La composition adhésive selon la revendication 1, dans laquelle ladite 1-oléfine supérieure est le 1-hexène ou le 1-butène.

5. La composition selon la revendication 1, contenant en outre au moins un antioxydant, au moins un autre additif ou un de leurs mélanges.

14

EP 0 398 896 B1

6. La composition adhésive selon la revendication 1 comprenant

(i) 30 à 70 % en poids d'au moins un copolymère statistique propylène/hexène pratiquement amorphe contenant de 20 à 50 % en poids de 1-hexène, ledit copolymère ayant une viscosité à l'état fondu de 2 000 à 20 000 cPs à 190°C,

(ii) 20 à 50 % en poids d'au moins un agent d'adhésivité solide comprenant des résines hydrocarbonées ou des résines polyterpéniques, ledit agent d'adhésivité ayant un point de ramollissement par la méthode bille et anneau de 70 à 145°C,

(iii) 0 à 30 % en poids d'au moins un agent d'adhésivité liquide ayant une viscosité de 10 000 à 50 000 cPs à 23°C et un point de ramollissement par la méthode bille et anneau de 5 à 30°C et

(iv) de 1 à 10 % en poids d'au moins une cire hydrocarbonée de faible viscosité, pratiquement cristalline, de haute densité ne contenant pratiquement pas de propylène et ayant une viscosité à l'état fondu de 3 à 4 000 cPs à 150°C et un point de fusion d'environ 90 à 125°C.

7. La composition selon la revendication 6, dans laquelle

le composant (i) comprend : 40 à 65 % en poids d'au moins un copolymère statistique propylène/hexène pratiquement amorphe contenant de 30 à 40 % en poids de 1-hexène, ledit copolymère ayant une viscosité à l'état fondu de 4 000 à 20 000 cPs à 190°C et un point de ramollissement par la méthode bille et anneau de 100 à 134°C,

le composant (ii) comprend : 25 à 40 % en poids d'au moins un agent d'adhésivité solide comprenant des résines hydrocarbonées ou des résines polyterpéniques,

le composant (iii) comprend : de 15 à 25 % en poids d'au moins un agent d'adhésivité liquide ayant une viscosité de 20 000 à 40 000 cPs à 23°C et un point de ramollissement par la méthode bille et anneau de 10 à 20°C et une Tg de -10 à -30°C et

le composant (iv) comprend : de 3 à 7 % en poids d'au moins une cire de polyéthylène de faible viscosité pratiquement cristalline ayant une viscosité à l'état fondu de 3 à 1 000 cPs à 150°C et un point de fusion de 105 à 125°C.

8. La composition adhésive selon la revendication 6, dans laquelle ledit agent d'adhésivité solide est une résine hydrocarbonée en $C_5$ ou une résine polyterpénique.

9. La composition adhésive selon la revendication 6, dans laquelle ledit agent d'adhésivité liquide est un polyterpène synthétique.

10. La composition adhésive selon la revendication 6, ayant une couleur Gardner de moins de 3.

11. La composition adhésive selon la revendication 1, ayant une viscosité à l'état fondu de 4 000 à 10 000 cPs à 135°C, une valeur de pénétration du cône mesurée selon la norme ASTM D-1403 d'au moins 10 dmm, un point de ramollissement par la méthode bille et anneau de 100 à 120°C et une couleur Gardner de moins de 7, ladite composition comprenant un mélange de :

(a) 40 à 65 % en poids d'au moins un copolymère statistique propylène/hexène pratiquement amorphe contenant de 30 à 40 % en poids de 1-hexène, ledit copolymère ayant une viscosité à l'état fondu de 4 000 à 20 000 cPs à 190°C et un point de ramollisement par la méthode bille et anneau de 124 à 134°C,

(b) 25 à 40 % en poids d'au moins un agent d'adhésivité solide comprenant une résine hydrocarbonée, ledit agent d'adhésivité solide ayant un point de ramollissement par la méthode bille et anneau de 70 à 145°C et un indice d'iode d'environ 30 à 100,

(c) 15 à 25 % en poids d'au moins un agent d'adhésivité liquide comprenant une résine hydrocarbonée, ledit agent d'adhésivité liquide ayant un point de ramollissement par la méthode bille et anneau de 10 à 20°C, une viscosité à l'état fondu de 20 000 à 40 000 cPs à 23°C et une Tg mesurée par DSC de -10 à -30°C,

(d) 3 à 7 % en poids d'au moins une cire de polyéthylène haute densité pratiquement cristalline, de faible viscosité, ne contenant pratiquement pas de propylène et ayant une viscosité à l'état fondu de 3 à 1 000 cPs à 150°C et un point de fusion de 105 à 125°C et

(e) 0,25 à 1,0 % en poids d'au moins un antioxydant.

12. La composition adhésive selon la revendication 11, ayant une viscosité à l'état fondu de 8 000 cPs à 135°C, un point de ramollissement par la méthode bille et anneau de 117°C et une couleur Gardner de moins de 3 et dans laquelle :

15

le composant (a) comprend :

48 % en poids dudit copolymère propylène/hexène amorphe ayant un point de ramollissement par la méthode bille et anneau de 132°C et une viscosité à l'état fondu de 5 500 cPs à 190°C,

le composant (b) comprend :

27 % en poids d'un agent d'adhésivité solide ayant un point de ramollissement par la méthode bille et anneau de 130°C et une viscosité à l'état fondu de 1 000 cPs à 190°C,

le composant (c) comprend :

20 % en poids dudit agent d'adhésivité liquide ayant un point de ramollissement par la méthode bille et anneau de 20°C, une Tg de -20°C et une viscosité à l'état fondu de 40 000 cPs à 23°C,

le composant (d) comprend :

5 % en poids de ladite cire de polyéthylène ayant un point de fusion de 123°C, une densité de 0,95 g/cm$^3$ et une viscosité à l'état fondu à 150°C de 500 cPs et

le composant (e) comprend :

0,5 % en poids dudit antioxydant.

13. Un procédé pour fabriquer une couche comprenant l'application de la composition adhésive selon la revendication 1 sur une couche jetable ou une portion de celle-ci.

14. Un article comprenant une couche jetable sur laquelle est appliquée la composition adhésive selon la revendication 1.